# EUROPÄISCHE PATENTSCHRIFT

(11) **EP 0 612 677 B1**
(45) Veröffentlichungstag und Bekanntmachung des Hinweises auf die Patenterteilung: **04.01.1995**
(21) Anmeldenummer: 93102775.9
(22) Anmeldetag: 23.02.1993
(51) Int. Cl.: B65G 54/02, B65H 3/16, H02K 41/025, B21D 43/18

(54) **Fördersystem für metallische Platinen und Bänder**
Transporting system for metallic plates and strips
Système de transport pour disques et bandes métalliques

(43) Veröffentlichungstag der Anmeldung: 31.08.1994
(73) Patentinhaber: HERMANN SCHLEICHER GmbH & Co. Maschinenfabrik, D-91093 Hessdorf (DE)
(72) Erfinder: Schleicher, Hermann, Dipl.-Ing., W-8521 Rathsberg (DE)
(74) Vertreter: Hoepffner, Günter, Dipl.-Ing. Dr.jur.

(56) Entgegenhaltungen:
- US-A- 4 077 507
- US-A- 4 704 568
- PATENT ABSTRACTS OF JAPAN vol. 10, no. 40 (M-454)(2097) 18. Februar 1986
- SOVIET INVENTIONS ILLUSTRATED Section PQ, Week J51, 9. Februar 1983 DerwentPublications Ltd., London, GB; Class Q36, AN B4383
- PATENT ABSTRACTS OF JAPAN vol. 12, no. 229 (M-714)(3076) 29. Juni 1988

## Beschreibung

Die Durchsatzmenge von Querteilanlagen (Scheren, Stapeleinrichtungen) und Pressen (Ladesysteme, Vorschubsysteme), insbesondere bei Großtransferpressen wird weitgehend durch die Transportgeschwindigkeit des zugehörigen Fördersystems bestimmt. Darüber hinaus müssen die Fördersysteme so konstruiert sein, daß Beschädigungen der Platinen, wie sie zum Beispiel durch Transportrollen, Endanschläge oder Führungsschienen verursacht werden, weitgehend vermieden werden. Neben dem bekannten rein mechanischen Fördersystem mit Transportwagen, Rollgängen, Bändern und schienengeführten Schlitten ist ein Fördersystem für metallische aus magnetischem Werkstoff bestehende Platinen bekanntgeworden, bei dem das Magnetfeld des Stators eines Linearmotors den Vorschub der Platinen (Läufer) bewirkt. In Transportrichtung gesehen sind hinter und vor dem Linearmotor Luftdüsen angeordnet.

Die aus den Luftdüsen ausströmende Luft erzeugt zwischen Linearmotor (Stator) und Platine (Läufer) ein Luftkissen, das verhindert, daß diese vom Linearmotor angezogen wird. Die Platine wird demnach durch die magnetische Vorschubkraft des Linearmotors berührungslos fortbewegt (vgl. US-A-4.077.507). Mit der vorerwähnten Einrichtung können hohe Transportgeschwindigkeiten erreicht werden, sie hat aber den Nachteil, daß durch die Anordnung der Luftdüsen vor und hinter dem Linearmotor im Luftdüsenbereich die größten Kräfte auf die Platinen auftreten und so etwa in der Mitte des Linearmotors unerwünschte Durchbiegungen auftreten. Die positionsgerechte Führung ist durch die unterschiedliche Druckverteilung im Luftkissen äußerst erschwert und bedarf eines erheblichen Aufwandes an Montagearbeit zur Positionsabstimmung. Darüber hinaus, und das ist besonders nachteilig, ist nur die Förderung von dicken Platinen (mehr als 7 mm) aus magnetischem Werkstoff möglich. Dieser Nachteil ist um so gewichtiger, als die Verwendung von Aluminiumplatinen, also einem nichtmagnetischen Metall im Karosseriebau, ständig steigt. Weiterhin ist aus US-A-4 077 507 (Fig. 3) ein Fördersystem, gemäß dem Oberbegriff des Anspruchs 1, bekannt.

Aufgabe der Erfindung ist es, ein neues Fördersystem für metallische Platinen bestehend aus magnetischem oder nichtmagnetischem Werkstoff zu schaffen, das die vorgenannten Nachteile beseitigt und eine weitgehend mechanisch berührungslose Förderung der Platinen gewährleistet.

Die Lösung besteht darin, daß mit Spalt für den Durchsatz der Platinen (Läufer) flächenparallel zur ersten Düsenplatte eine zweite Düsenplatte aus nichtmetallischem Werkstoff angeordnet sind und daß die erste und die zweite Düsenplatte zum Spalt hin offene, über ihre Fläche verteilte Düsen aufweisen, die über Luftverbindungen im Inneren der Düsenplatten an eine Druckluftquelle anschließbar sind.

Bei der Anwendung des erfindungsgemäßen Fördersystems ist der gesamte Förderweg z.B. von der Entstapelanlage bis zur Presse in Förderabschnitte unterteilt. Jeder Förderabschnitt ist mit einem Linearmotor und Düsenplatten versehen. Insbesondere bei Beginn des Förderweges können zwei Linearmotoren mit Düsenplatten in einem Winkel zueinander angeordnet werden. Mit Hilfe von Näherungssensoren, die die Lage der einzelnen Platinen erfassen ist es so möglich, die Erregung der Wicklungen der Linearmotoren so zu verändern, daS die Platinen die gewünschte Stellung einnehmen. Bei einer Gabelung des Förderweges, wenn sich dieser z.B. in drei verschiedene abgezweigte Förderwege aufgliedert, eignet sich die kreuzförmige Anordnung von vier Linearmotoren mit Düsenplatten, wobei jeder Linearmotor einen Kreuzschenkel bildet. Hierbei wird ständig die Position der Platine durch Näherungssensoren erfaßt. Durch die elektrischen Ortungssignale der Näherungssensoren ist die jeweilige Position bestimmt. In Abhängigkeit von der erfaßten Position bzw. der Ortungssignale werden über eine elektronische Schaltung die Magnetfelder der einzelnen Linearmotoren beeinflußt, bis die gewünschte Position erreicht ist. Die Verwendung von Näherungssensoren ist jedoch nicht auf das vorerwähnte Einsatzbeispiel beschränkt. Längs des gesamten Förderweges können in jedem Förderabschnitt Näherungssensoren vorgesehen werden, gegebenenfalls im Zusammenwirken mit Zeitgliedern, so daß über die Magnetfelder der Linearmotoren die Platinen positioniert, beschleunigt und in ihrer Transportgeschwindigkeit verzögert werden können. Auch Messrollen können zusätzlich vorgesehen werden.

Die vorhergehende Erläuterung macht deutlich, welche vielfältige Beeinflussung des Fördervorganges mit dem neuen Fördersystem möglich ist.

Zur näheren Erläuterung der Erfindung wird auf die Zeichnung verwiesen, es zeigt
- Fig. 1: Den grundsätzlichen Aufbau des Fördersystems - schematisch -
- Fig. 2: Die gebrauchsgerechte Anordnung von zwei parallel zueinander angeordneten Linearmotoren - schematisch -
- Fig. 3: Die kreuzförmige Anordnung von vier Linearmotoren

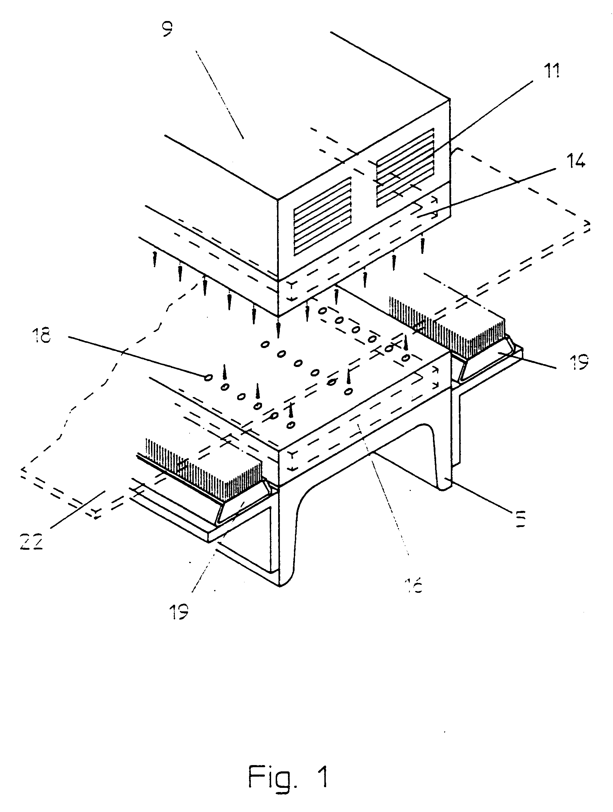

In Fig. 1 ist das erfindungsgemäße Fördersystem in seinen wesentlichen Merkmalen zum besseren Verständnis schematisch vereinfacht dargestellt.

Der Stator des Linearmotors 9 besteht aus einem langgestreckten Quader, in dessen Innerem Blechpakete mit Wicklungen 11 angeordnet sind. Diese Wicklungen 11 erzeugen, wenn sie vom elektrischen Strom durchflossen werden, eine magnetische Kraft, die den Läufer d.h. die metallische Platine 22 mit einer Teilkomponente der magnetischen Kraft mit großer Geschwindigkeit längs verschieben. Die andere Teilkomponente der magnetischen Kraft zieht die Platine 22 aus magnetischem Werkstoff an den Linearmotor (Stator) 9 an oder stößt eine Platine 22 aus nichtmagnetischem Werkstoff ab.

Um die Wirkung dieser Teilkomponente der magnetischen Kraft aufzuheben, sind die erste und zweite Düsenplatte 14 und 16 aus nichtmagnetischem Werkstoff vorgesehen. Die erste und zweite Düsenplatte 14 u. 16 sind an ihrer Oberfläche mit gleichmäßig über die gesamte Fläche verteilten Düsen 18 versehen. Von den Düsen 18 führen Luftverbindungen z.B. Bohrungen im Inneren der ersten und zweiten Düsenplatte 14, 16 zu einer Druckluftquelle.

Die erste Düsenplatte 14 liegt fest an der unteren aktiven Oberfläche des Linearmotors (Stator) 9 an. Die Düsen 18 befinden sich dabei auf der dem Linearmotor abgewandten Seite. Dabei kann die erste Düsenplatte 14 so ausgebildet werden, daß sie mit ihren Rändern den Quader des Linearmotors (Stator) 9 ganz oder teilweise umschließt, so daS der Linearmotor (Stator) 9 und die erste Düsenplatte 14 eine konstruktive Einheit bilden.

Flächenparallel zur ersten Düsenplatte 14 ist mit Spaltabstand die zweite Düsenplatte 16 angeordnet. Bei der zweiten Düsenplatte 16 weisen die Düsen 18 in Richtung auf den Linearmotor (Stator) 9. Im übrigen ist die zweite Düsenplatte 16 wie die erste Düsenplatte 14 ausgebildet und ebenfalls an eine Luftdruckquelle angeschlossen.

Die Höhe des Spaltes zwischen der ersten und zweiten Düsenplatte 14 und 16 ist dabei so gewählt, daß er geringfügig größer ist als die Dicke des Materials der zu fördernden Platine 22.

Hierzu sind am Zwischenträger 5 für die zweite Düsenplatte 16 nicht dargestellte Vorrichtungen, gegebenenfalls auch am Linearmotor (Stator) 9 vorgesehen, die eine Einstellung der Höhe des Spaltes entsprechend der Dicke der zur Anwendung kommenden Platine 22 möglich machen.

Wie aus der Fig. 1 ferner hervorgeht, sind rechts und links der zweiten Düsenplatte 16, falls erforderlich auch rechts und links der ersten Düsenplatte 14, Bürstenstreifen 19 angeordnet. Auch für diese Bürstenstreifen 19 sind Vorrichtungen vorgesehen, die eine Einstellung in ihrer Höhe im Bezug auf die jeweilige Oberfläche der ersten und zweiten Düsenplatte 14 und 16 ermöglichen.

Beim Betrieb des Fördersystems mit Platinen 22 aus magnetischem Material wird zunächst die erste Düsenplatte 14 an die Druckluftquelle angeschlossen. Zwischen der in den Spalt eingeschobenen Platine 22 und der ersten Düsenplatte 14 bildet sich ein Luftkissen aus, das bei einem bestimmten Luftdruck verhindert, daß die Platine 22 vom Linearmotor (Stator) angezogen wird. Somit wird nur die Teilkomponente der magnetischen Kraft wirksam, die die Vorwärtsbewegung der Platine 22 bewirkt.

Sind Platinen 22 aus nichtmagnetischem Material zur Förderung vorgesehen, wird über die zweite Düsenplatte 16 ein Luftkissen zwischen dieser und der Platine 22 erzeugt, das die Platine in einem garantierten Abstand zum Linearmotor (Stator) 9 hält. Auch in diesem Fall wird somit nur die Teilkomponente für die Vorwärtsbewegung der Platine 22 wirksam. Die Luftkissen bewirken somit ein Schweben der Platine 22. Die Förderung erfolgt berührungslos.

Die Bürstenstreifen 19 haben dabei mehrere Funktionen. Zum einen verhindern sie eine Beschädigung der Oberfläche der Platine 22 beim Anfangvorgang, zum anderen erhöhen sie die Richtungsstabilität und zum dritten tragen sie zur Abdichtung der Luftkissen bei. Insbesondere gegen Beschädigung der Platine während des Anfahrvorgangs, aber auch bei Störungen ist es darüber hinaus vorteilhaft, die Düsenplatten 14, 16 aus hochgleitendem Material, eine Eigenschaft, die bei bestimmten Kunststoffen vorliegt, herzustellen. Kratzspuren werden auf diese Weise weitgehend vermieden. An Stelle der Bürstenstreifen können auch Rollen vorgesehen werden.

Der Transport der Platine 22 ist bei dem erfindungsgemäßen Fördersystem in weiten Bereichen lageunabhängig. Steigungen lassen sich problemlos bewältigen.

Die gleichmäßige Verteilung der Düsen über die Oberfläche der ersten und zweiten Düsenplatten 14, 16 gewährleistet, daß keine Durchbiegung der Platine 22 stattfindet. Bei Anwendung von Platinen besonders kleiner Dicke kann es vorteilhaft sein, mehrere Anschlüsse für die Druckluftquelle an den Düsenplatten 14 u. 16 vorzusehen, um die Druckverteilung über die gesamte Oberfläche der Düsenplatte zu vergleichmäßigen. Hierzu kann auch dienen, die Luftwiderstände der Verbindungen zu den Düsen 18 zu vergleichmäßigen.

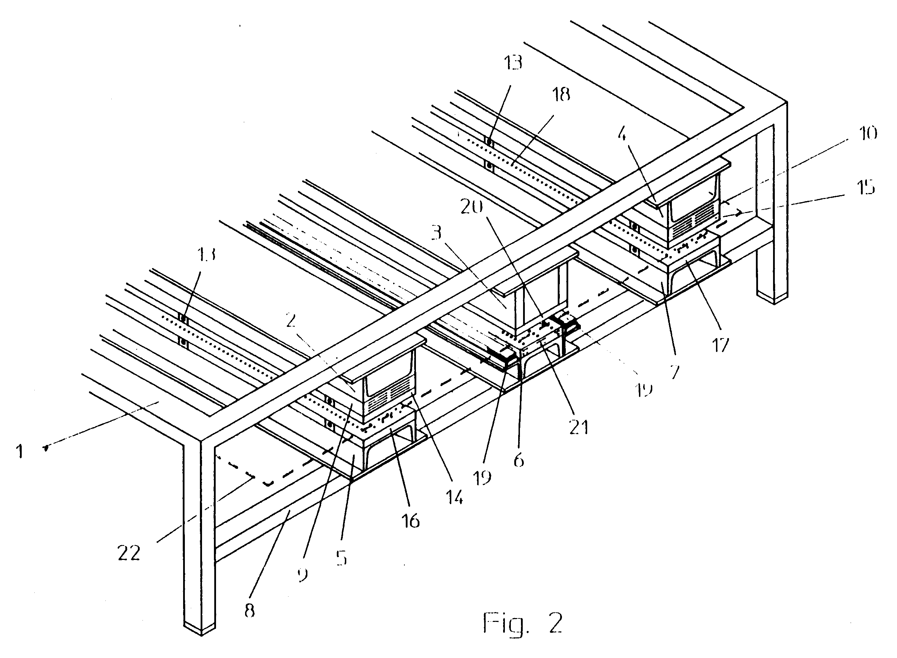

Fig. 2 zeigt die in der Praxis bevorzugte Ausbildung des neuen Fördersystems für Großtransferpressen.

Im Traggerüst 1 sind zwei Linearmotoren 9, 10 parallel mit Abstand zueinander angeordnet. Dabei werden die Linearmotoren 9, 10 von den oberen Zwischenträgern 2 u. 4 getragen. Die Zwischenträger ihrerseits sind am Traggerüst 1 befestigt.

Da es vorteilhaft ist, die Linearmotoren 9, 10 im Bereich der Längsränder der zur Förderung vorgesehenen Platine 22 anzuordnen, ist es vorteilhaft, die Querträger 2 u. 4 im Abstand zueinander einstellbar zu befestigen. Die ersten Düsenplatten 14, 15 und die zweiten Düsenplatten 16, 17 sind, wie dies in Fig. 1 schon beschrieben, angeordnet. Die zweiten Düsenplatten 16, 17 werden von den Zwischenträgern 5, 7 getragen, die ihrerseits am Querträger 8 des Traggerüstes 1 befestigt sind. Die Zwischenträger 5, 7 sind ebenfalls wie die Linearmotoren 9, 10 in ihrem Abstand zueinander einstellbar.

Mit 13 sind Näherungssensoren bezeichnet, die längs des Förderweges z.B. an den ersten Düsenplatten 14, 15 einstellbar befestigt sind. Mehrere Näherungssensoren 13 geben dabei elektrische Ortungssignale ab, die gemeinsam nach Verarbeitung in einer elektronischen Schaltung die Lage der Platine in Bezug auf eine gewünschte Richtung und in Bezug auf ihren Standort festlegt. Als Näherungssensoren können lichtabhängige, magnetische kapazitive oder mechanische Sensoren, wie z.B. Messräder, Glasmesstäbe verwendet werden, die ihren Meßwert als elektrische Signale abgeben.

Um eine mögliche Durchbiegung der Platine 22 zu vermeiden, sind zwischen den beiden Fördersystemen mit den Linearmotoren 9, 10 Hilfsdüsenplatten 20, 21 angeordnet. Die Hilfsdüsenplatten 20, 21 entsprechen in ihrem Aufbau den Düsenplatten 14, 15 u. 16, 17. Die erste Hilfsdüsenplatte 14 ist über einen Zwischenträger 3 am Traggerüst 1 befestigt, wobei der Zwischenträger 3 die Höhe der Linearmotoren 9 bzw. 10 ausgleicht. Die zweite Hilfsdüsenplatte 21 ist über den Zwischenträger 6 am Querträger 8 befestigt. Die erste und zweite Hilfsdüsenplatte 20, 21 sind ebenfalls wie die Düsenplatten 14, 15, 16, 17 an eine Luftdruckquelle angeschlossen. Auch zwischen der ersten oder zweiten Hilfsdüsenplatte 20 oder 21 und einer Platine kann somit ein die Platine positionisierendes Luftkissen aufgebaut werden.

Der Vorteil des Fördersystems nach Fig. 2 gegenüber der konstruktiven Ausbildung des Fördersystems nach Fig. 1 beruht darauf, daß die beiden im Abstand parallel zueinander angeordneten Linearmotoren 9, 10 eine höhere Richtungsstabilität der Platinen während der Förderbewegung gewährleisten und eine Beeinflussung der Förderrichtung der Platine 22 in Abhängigkeit von dem in der elektronischen Schaltung errechneten Signal stark erleichtert, indem in Abhängigkeit hiervon die magnetische Erregung des einen oder anderen Linearmotors 9, 10 geändert wird.

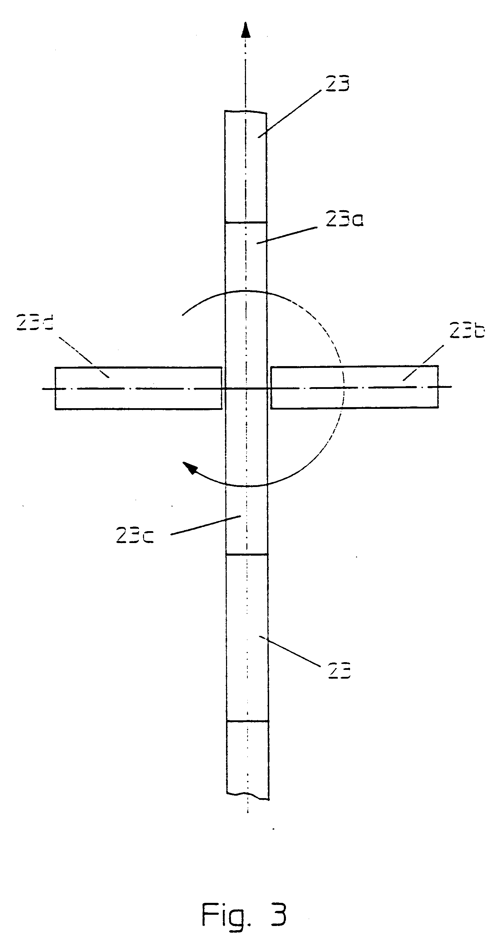

Fig. 3 zeigt die Unterteilung der Förderstrecke in Förderabschnitte 23. Jeder dieser Förderabschnitte besteht aus Fördersystemen, wie sie in den Fig. 1 und 2 dargestellt sind. Die Förderabschnitte 23 a), 23 b), 23 c) und 23 d) bilden zusammen ein Positioniersystem. Mit Hilfe der elektronischen Schaltung ist es möglich, die Magnetfelder der einzelnen Linearmotoren 23 a) bis 23 d) so zu ändern, daß sich eine im Kreuz der Fördersysteme befindliche Platine 22 in ihrer Ebene dreht. Eine Einstellung in eine gewünschte Position für die Platine ist somit möglich.

Das dargestellte Positioniersystem für Platinen eignet sich somit dazu, die Platinen vor dem Einlauf in die und beim Auslauf aus der Förderstrecke oder in die Presse zu positionieren. Ferner kann es dazu verwandt werden, die Platinen in abzweigende Förderstrecken umzulenken.

## Patentansprüche

1. Fördersystem für metallische Platinen mit einem oder mehreren Linearmotoren und Vorrichtungen zur Bildung von Luftkissen, die zur Fixierung des Abstandes der Platinen zu den Linearmotoren dienen, wobei auf der aktiven Seite eines jeden mit mehreren Wicklungen versehenen Primärteils des Linearmotors (9,10) eine erste Düsenplatte (14, 15,) vorgesehen ist **dadurch gekennzeichnet**, daß mit Spalt für den Durchsatz der Platinen (22) flächenparallel zur ersten Düsenplatte (14, 15) eine zweite Düsenplatte (16, 17) aus nichtmetallischem Werkstoff angeordnet sind und daß die erste und die zweite Düsenplatte (14, 15, 16, 17) zum Spalt hin offene, über ihre Fläche verteilte Düsen (18) aufweisen, die über Luftverbindungen im Inneren der Düsenplatten (14, 15, 16, 17) an eine Druckluftquelle anschließbar sind.

2. Fördersystem nach Patentanspruch 1, **dadurch gekennzeichnet,** daß die Düsenplatten (14, 15, 16, 17) an ihren Längsrändern mit einstellbaren Bürstenstreifen (19) versehen sind.

3. Fördersystem nach Patentanspruch 1, **dadurch gekennzeichnet**, daß die Düsenplatten (14, 15, 16, 17) an ihren Längsrändern mit einstellbaren Rollen versehen sind.

4. Fördersystem nach Patentanspruch 1, **dadurch gekennzeichnet**, daß die Düsenplatten (14, 15, 16, 17) aus Kunststoff bestehen und daß die ersten Düsenplatte (14, 15) als Ummantelung für den Primärteil des Linearmotors (9, 10) ausgeformt sind.

5. Fördersystem nach Patentanspruch 1, **dadurch gekennzeichnet**, daß die Düsenplatten (14, 15, 16, 17) aus nichtmagnetischem Werkstoff (Kunststoff, Glas, Holz) mit hohen Gleiteigenschaften hergestellt sind.

6. Fördersystem nach Patentanspruch 1, **dadurch gekennzeichnet**, daß die Förderstrecke in Förderabschnitte (23) gegliedert ist und für jeden Förderabschnitt ein Linearmotor (9, 10) mit Düsenplatten (14, 15, 16, 17) vorgesehen ist.

7. Fördersystem nach Patentanspruch 1, **dadurch gekennzeichnet**, daß für den einzelnen Förderabschnitt (23) zwei mit Abstand paralell zueinander angeordnete Linearmotoren (9, 10) und Düsenplatten (14, 15, 16, 17) vorgesehen sind, die zur Anpassung an die Platinenbreite (22) einstellbar sind.

8. Fördersystem nach Patenanspruch 7, **dadurch gekennzeichnet**, daß der Abstand zwischen den paralellen Linearmotoren (9, 10) mit Düsenplatten (14, 15, 16, 17) durch zwei Hilfsdüsenplatten (20, 21) ganz oder teilweise überbrückt ist.

9. Fördersystem nach Patentanspruch 1**, dadurch gekennzeichnet**, daß zum Positionieren der Platinen wenigstens zwei Linearmotoren (9, 10) in einem Winkel zueinander angeordnet sind.

10. Fördersystem nach Patenanspruch 9, **dadurch gekennzeichnet**, daß vier Linearmotoren (9, 10) in einem Kreuz zueinander angeordnet sind, so daß die Linearmotoren (9, 10) die Kreuzschenkel bilden.

11. Fördersystem nach Patentanspruch 1, **dadurch gekennzeichnet**, daß Näherungssensoren (13) für die Platinen (22) angeordnet sind, die ihrerseits Steuerungssignale an die elektrische Steuerung der Linearmotoren abgeben.

## Claims

1. A conveying system for metallic panels with one or more linear motors and means for the generation of air cushions which are used to set the distance between said panels and said linear motors, with a first nozzle plate (14, 15) being provided on the active side of every primary part with several windings of said linear motor (9, 10), **characterised in the fact** that in parallel to the surface of said first nozzle plate, a second nozzle plate (16, 17) out of non-metallic material with a gap for the throughput of said panels (22) is arranged and said first and said second nozzle plate (14, 15, 16, 17) possess nozzles (18), whose outlets point into the direction of said gap and which are distributed over the surfaces of said nozzle plates, said nozzles being connectable to sources of compressed air via air connections in the interior of said nozzle plates (14, 15, 16, 17).

2. Conveying system as claimed in claim 1, **characterised in the fact** that said nozzle plates (14, 15, 16, 17) are provided with adjustable brush strips at their longitudinal edges.

3. Conveying system as claimed in claim 1, **characterised in the fact** that said nozzle plates (14, 15, 16, 17) are provided with adjustable rollers at their longitudinal edges.

4. Conveying system as claimed in claim 1, **characterised in the fact** that said nozzle plates (14, 15, 16, 17) are made of plastic and that the first nozzle plates (14, 15) are formed as casings for said primary part of said linear motor (9, 10).

5. Conveying system as claimed in claim 1, **characterised in the fact** that said nozzle plates (14, 15, 16, 17) are fabricated out of non-magnetic materials (plastics, glass, wood) with supergliding features.

6. Conveying system as claimed in claim 1, **characterised in the fact** that the conveying route is divided into conveying sections and that for every conveying section a linear motor (9, 10) with nozzle plates (14, 15, 16, 17) is provided.

7. Conveying system as claimed in claim 1, **characterised in the fact** that for every conveying section two linear motors arranged in parallel to each other with space in between and nozzle plates (14, 15, 16, 17) are provided, which can be adjusted to the width of said panels.

8. Conveying system as claimed in claim 7, **characterised in the fact** that the space between said parallel linear motors (9, 10) with nozzle plates (14, 15, 16, 17) is entirely or partially bridged by two additional nozzle plates (20, 21).

9. Conveying system as claimed in claim 1, **characterised in the fact** that for the positioning of said panels at least two linear motors (9, 10) are arranged at an angle to each other.

10. Conveying system as claimed in claim 9, **characterised in the fact** that four linear motors (9, 10) are arranged crosswise to each other with said linear motors (9, 10) forming the legs of the cross.

11. Conveying system as claimed in claim 1, **characterised in the fact** that proximity sensors (13) for said panels (22) are provided with said proximity sensors outputting control signals to the electric control of said linear motors.

## Revendications

1. Système de transport pour des platines métalliques avec un ou plusieurs moteurs électriques linéaires et des dispositifs pour la formation de coussins d'air, qui servent à fixer l'écart entre les platines et les moteurs électriques linéaires, une première plaque de buses (14, 15) étant prévue du côté actif de chaque partie primaire du moteur électrique linéaire (9, 10) pourvue de plusieurs enroulements, caractérisée par le fait qu'une deuxième plaque de buses (16, 17) en matière non-métallique est prévue avec fente pour le passage des platines (22), sa surface étant parallèle à celle de la première plaque de buses (14, 15), et que la première et la deuxième plaque de buses (14, 15, 16, 17) sont dotées de buses ouvertes du côté de la fente et réparties sur leur surface qui sont raccordables à une source d'air comprimé à travers des liaisons d'air a l'intérieur des plaques de buses (14, 15, 16, 17).

2. Système de transport selon la revendication n° 1 du brevet, **caractérisé par le fait** que les plaques de buses (14, 15, 16, 17) sont pourvues à leurs bords longitudinaux de lames porte-balais (19) réglables.

3. Système de transport selon la revendication n° 1 du brevet, **caractérisé par le fait** que les plaques de buses (14, 15, 16, 17) sont pourvues à leurs bords longitudinaux de rouleaux réglables.

4. Système de transport selon la revendication n° 1 du brevet, **caractérisé par le fait** que les plaques de buses (14, 15, 16, 17) sont en matière plastique et que les premières plaques de buses (14, 15) ont la forme d'une enveloppe pour la partie primaire du moteur électrique linéaire (9, 10)

5. Système de transport selon la revendication n° 1 du brevet, **caractérisé par le fait** que les plaques de buses (14, 15, 16, 17) ont été fabriquées en matière non-magnétique (matière plastique, verre, bois) avec d'importantes propriétés de glissement.

6. Système de transport selon la revendication n° 1 du brevet, **caractérisé par le fait** que le parcours de transport est divisé en sections de transport (23) et que pour chaque section de transport un moteur électrique linéaire (9, 10) avec des plaques de buses (14, 15, 16, 17) est prévu.

7. Système de transport selon la revendication n° 1 du brevet, **caractérisé par le fait** que pour chaque section de transport (23) sont prévus deux moteurs électriques linéaires (9, 10), placés avec écart entre eux et parallèlement l'un à l'autre, et des plaques de buses (14, 15, 16, 17) qui sont réglables pour l'adaptation à la largeur de la platine (22).

8. Système de transport selon la revendication n° 7 du brevet, **caractérisé par le fait** que l'écart entre les moteurs électriques linéaires parallèles (9, 10) avec des plaques de buses (14, 15, 16, 17) est ponté entièrement ou partiellement par deux plaques de buses auxiliaires (20, 21).

9. Système de transport selon la revendication n° 1 du brevet, **caractérisé par le fait** que pour le positionnement des platines au moins deux moteurs électriques linéaires (9, 10) sont disposés en formant un angle entre eux.

10. Système de transport selon la revendication n° 9 du brevet, **caractérisé par le fait** que quatre moteurs électriques linéaires (9, 10) sont disposés en forme de croix de sorte que les moteurs électriques linéaires (9, 10) représentent les branches de la croix.

11. Système de transport selon la revendication n° 1 du brevet, **caractérisé par le fait** que des détecteurs de proximité (13) sont disposés pour les platines (22) qui, eux, émettent des signaux de commande et les passent à la commande électrique des moteurs électriques linéaires.
